Europäisches Patentamt

European Patent Office

Office européen des brevets

(19)

(11) **EP 1 721 933 A1**

(12) **EUROPEAN PATENT APPLICATION**
published in accordance with Art. 158(3) EPC

(43) Date of publication:
**15.11.2006 Bulletin 2006/46**

(51) Int Cl.:
*C08L 51/02* (2006.01)   *C08F 251/00* (2006.01)
*D21H 17/45* (2006.01)   *D21H 17/43* (2006.01)
*D21H 21/10* (2006.01)   *B01D 21/01* (2006.01)
*C02F 11/14* (2006.01)

(21) Application number: **05709248.8**

(22) Date of filing: **20.01.2005**

(86) International application number:
**PCT/JP2005/000635**

(87) International publication number:
**WO 2005/068552 (28.07.2005 Gazette 2005/30)**

(84) Designated Contracting States:
**AT BE BG CH CY CZ DE DK EE ES FI FR GB GR HU IE IS IT LI LT LU MC NL PL PT RO SE SI SK TR**

(30) Priority: **20.01.2004   JP 2004011836**
**20.01.2004   JP 2004011840**

(71) Applicant: **Toagosei Co., Ltd**
**Minato-ku, Tokyo 105-8419 (JP)**

(72) Inventors:
• **MORI, Yoshio**
**Nagoya-shi,**
**Aichi 4550027 (JP)**

• **ADACHI, Koichi**
**Nagoya-shi,**
**Aichi 4550027 (JP)**
• **TAKEDA, Ken**
**Nagoya-shi,**
**Aichi 4550027 (JP)**
• **TSUZUKI, Tetsuya c/o Toagosei Co. Ltd.,**
**Kagawa 762-0004 (JP)**

(74) Representative: **Pohlmann, Eckart**
**WILHELMS, KILIAN & PARTNER,**
**Patentanwälte,**
**Eduard-Schmid-Strasse 2**
**81541 München (DE)**

(54) **COMPOSITION CONTAINING AMPHOTERIC WATER-SOLUBLE POLYMER**

(57)    An object of the present invention is to provide a composition excellent in various flocculation performances for various sludge and papermaking systems, especially excellent as a polymer flocculant, and provide a sludge-dewatering agent excellent in dewatering performances for various sludge, especially excellent in floc-culationability, as well as a retention aid which can realize a high retention and ensure excellent formation of paper and which is easy to use.

A composition is provided, which comprises two or more amphoteric water-soluble polymers in combination shown below, the polymers being obtained by polymer-izing a cationic radical-polymerizable monomer and an anionic radical-polymerizable monomer in a presence of a polysaccharide.
1. A combination of a polymer satisfying the molar ratio of the cationic radical-polymerizable monomer to the anionic radical-polymerizable monomer (hereinafter referred to as Ca/An) of Ca/An≥1, and a polymer satisfying Ca/An<1, or
2. a combination of two kinds of polymers satisfying Ca/An≥1.

EP 1 721 933 A1

**Description**

TECHNICAL FIELD

The present invention relates to a composition containing an amphoteric water-soluble polymer. The present composition is useful as a polymer flocculant, and particularly useful for a sludge-dewatering agent, a retention aid, a thickener and other applications. Thus, the present composition can advantageously be used in these technical fields.

BACKGROUND ART

Water-soluble polymers, particularly those with a high molecular weight, are conventionally used in various technical fields of polymer flocculants, retention aids, thickeners, and the like.
Polymers consisting of a starch modified with a water-soluble polymer (hereinafter referred to as starch-modified polymers) are often used as the above-mentioned water-soluble polymers particularly for sludge-dewatering of papermaking waste water because they have good compatibility with pulps contained in the waste water and exhibit excellent sludge-dewatering performance.
In addition to the application as the sludge-dewatering agent, starch-modified polymers are also studied for applications as additives for papermaking, for example, retention aids because they have good compatibility with pulps and provide paper with various excellent properties.
As the starch-modified polymer and a process for producing the same, mention may be made of, for example, a polymer with a particular viscosity, having a specific cation-etherified starch as a backbone polymer to which a side chain having a quaternary ammonium-modified cationic group is grafted (Patent Document 1), a polymer having a polysaccharide as a backbone polymer to which copolymers of (meth)acrylamide and (meth)acrylic acid or its salt are grafted as side chains (Patent Document 2), or a production process which involves copolymerizing a polysaccharide and a quaternary salt of dimethylaminoethyl methacrylate using a redox polymerization initiator or a cerium-based polymerization initiator (Non-patent Document 1).
In the meantime, cationic polymer flocculants have been often used alone for dewatering of sludge.
In recent years, however, due to increase of sludge generation and deterioration of sludge properties, conventional cationic polymer flocculants have a limit to disposal capacity, and do not necessarily dispose of sludge satisfactorily in terms of moisture content of dewatered sludge cake, SS recovery rate and the like. Since there is a demand for improving these points, various amphoteric polymer flocculants and dewatering methods using the same have been studied.
For example, the following studies are known: a method for dewatering sludge in which a specific ionic equivalent amount of a cation-rich amphoteric polymer flocculant is added to an organic sludge that is free from inorganic sludge but supplemented with an inorganic flocculant and has a pH of 5-8 (Patent Document 3), a method for dewatering sludge in which an acrylate based cationic polymer flocculant is used in combination with an amphoteric polymer flocculant for an organic sludge at a pH of 5-8 (Patent Document 4), a dewatering method in which an anion-rich amphoteric polymer flocculant having a specific composition is added to sludge which is supplemented with an inorganic flocculant and set to a pH of 5 or less (Patent Document 5), a method for treating an organic sewage in which an inorganic flocculant, an anionic polymer and a cation-rich amphoteric polymer flocculant are sequentially added to the sewage (Patent Document 6), and the like.
Meanwhile, in papermaking processes, when or after a filler-containing stuff is diluted to a final concentration for feeding into a papermaking machine, a retention aid is conventionally added thereto so that the filler and pulp are prevented from flowing from the papermaking machine to whitewater, thereby improving the retention.
As the retention aid, water soluble polymers such as water-soluble high-molecular-weight polyethyleneoxide and cationic polyacrylamide are usually used.
However, the retention aids containing these water soluble polymers must be used in a relatively large amount in order to improve the retention. As a result, they are problematic in that huge flocs are produced, thereby considerably deteriorating paper formation.
In order to solve this problem, a so-called dual system in which a cationic polymer is used in combination with an anionic compound or polymer is recently noticed. Typical examples thereof include a method in which an anionic inorganic compound such as bentonite is added after addition of a cationic polymer (Patent Document 7), and a method in which an anionic colloidal silica is added after addition of a cationic polymer (Patent Document 8).
Patent Document 1: Japanese Patent Publication (Kokoku) No. 62-21007 (claims).
Patent Document 2: Japanese Patent Laid-Open (Kokai) No. 6-254306 (claims).
Non-patent Document 1: Bulletin of the Chemical Society of Japan, 1976, 10: 1625-1630.
Patent Document 3: Japanese Patent Publication (Kokoku) No. 5-56199 (claims).
Patent Document 4: Japanese Patent No. 2933627(claims).

Patent Document 5: Japanese Patent Publication (Kokoku) No. 6-239 (claims).
Patent Document 6: Japanese Patent Laid-Open (Kokai) No. 6-134213 (claims).
Patent Document 7: Japanese Patent Laid-Open (Kokai) No. 4-281095 (claims).
Patent Document 8: Japanese Patent No. 2945761(claims).

DISCLOSURE OF INVENTION

PROBLEMS TO BE SOLVED BY THE INVENTION

Although the amphoteric polymer based sludge dewatering agents described in the Patent Documents 3-6 each have each advantage, it cannot be said that they are always effective measures against the recent tendency for waste water to become difficult to dewater.

In addition, although the retention aids described in the Patent Documents 7 and 8 are relatively good in balance between the retention and the paper formation, the level of improvement is still not sufficient. Moreover, these retention aids comprise two liquids that must be used in combination, and thus they are disadvantageous in that they must be used in the papermaking process in a complicated manner, for example, taking into account where and when each liquid is added, and how much each liquid is combined together.

Further, when starch-modified polymers described in the Patent Documents 1 and 2 and Non-patent Document 1 are used as polymer flocculants such as sludge dewatering agents and retention aids, they are often insufficient in flocculation or dewatering performance, depending upon kinds of waste water or kinds of pulp raw materials contained in the stuff. In particular, depending upon types of sludge, they exhibit insufficient flocculationability. More specifically, they are not satisfactory because flocs are not made quickly after these polymer flocculants are added, and are not hard to collapse even after stirring is continued.

In order to solve the above problems, the present inventors have suggested a polymer flocculant which comprises a composition containing two amphoteric polymers which are different in ionic equivalency with each other (Patent Document 9).

This polymer flocculant exhibits an excellent performance to solve the above mentioned problems, but is sometimes insufficient in use for applications that require more excellent sludge dewatering performance and more excellent retention. Particularly when it is used as a sludge dewatering agent, it may be insufficient in flocculationability, depending upon types of sludge, and more specifically, it is insufficient in terms of the above-mentioned points. Also, when it is used as a retention aid, it provides a good retention but is sometimes insufficient in paper formation depending upon types of stuff.

The present inventors have made intensive researches for finding out a composition that exhibits various excellent flocculation performances for various sludge and papermaking system, particularly a composition that is excellent as a polymer flocculant. Further, they have made intensive researches for finding out a sludge dewatering agent which is excellent in dewatering performance for various sludge, particularly flocculationability, as well as a novel retention aid which can achieve a high retention, can ensure an excellent paper formation, and is easy to use.

Patent Document 9: Japanese Patent Laid-Open (Kokai) No. 2003-175302 (claims).

MEANS FOR SOLVING THE PROBLEMS

As the result of various researches, the present inventors have found that a composition is effective, which comprises two or more kinds of amphoteric water-soluble polymers, said polymers being obtained by polymerizing a polysaccharide with a cationic monomer and an anionic monomer, in which said polymers are different from each other in proportion of said monomers. This finding has led to the completion of the invention.

The present invention is described below in detail.

In this specification, acrylate or methacrylate is designated as (meth)acrylate; acrylic acid or methacrylic acid as (meth)acrylic acid; and acrylamide or methacrylamide as (meth)acrylamide.

1. Amphoteric water-soluble polymers

The amphoteric water-soluble polymer (hereinafter simply referred to as amphoteric polymer) used in the present invention is one obtained by polymerizing a cationic radical-polymerizable monomer (hereinafter simply referred to as cationic monomer) and an anionic radical-polymerizable monomer (hereinafter simply referred to as anionic monomer) in a presence of a polysaccharide.

The respective components as well as the production process are described below.

1-1. Polysaccharide

In the present invention, various polysaccharides may be used.

By way of example, polysaccharides from natural sources include starches. Specific examples of starches include potato starch, waxy potato starch, sweet potato starch, sugarcorn starch, high-amylose corn starch, wheat starch, rice starch, tapioca starch, sago starch, glumannan, and galactan; and starch raw materials such as wheat flour, corn flour, cut and dried sweet potato, and cut and dried tapioca.

Examples of polysaccharides other than starches include celluloses such as methyl cellulose, ethyl cellulose, hydroxyethyl cellulose and carboxymethyl cellulose, sodium alginate, gum arabic, dextran, gelatin, casein, collagen, chitin, and chitosan.

Preferred polysaccharides are starches, specifically including the above-described starches such as potato starch, waxy potato starch, sweet potato starch, sugarcorn starch, high-amylose corn starch, wheat starch, rice starch, tapioca starch, sago starch, glumannan, and galactan.

The starch may be a processed starch obtained by chemical or enzymatic modification. Processing methods include, for example, oxidation, esterification, etherification, and acid treatment.

Polysaccharides used in the present invention are preferably the above-described polysaccharides which have been made cationic or amphoteric by an ordinary method because they have high copolymerizability with the later-described monomers and provide flocculants excellent in performance.

Polysaccharides may be cationized by an ordinary method.

Cationizing methods include treatment of a starch raw material with a cationizing agent. Specific examples of the cationizing agent include tertiary amines such as diethylaminoethyl chloride and quaternary ammonium salts such as 3-chloro-2-hydroxypropyltrimethylammonium chloride and glycidyltrimethylammonium chloride.

The cationized polysaccharide preferably has a degree of cation substitution of 0.01 to 0.06 weight/weight%, more preferably 0.02 to 0.06 weight/weight% in terms of nitrogen atom.

Polysaccharides may be, for example, those which have been subjected to a known reaction after the cationization. By way of example, they may be amphoteric polysaccharides which have been subjected to an anionization reaction. Specific examples of the anionization reaction include phosphorylation using an inorganic phosphate or the like; urea phosphorylation and oxidation using a hypohalite or the like; carboxymethylation using monochloroacetic acid; and sulfation.

Polysaccharides are preferably employed in a form of a glue solution, and thus are preferably those subjected to cooking treatment. Herein, "cooking" refers to treatment of heating polysaccharides to their gelatinization temperature or higher. Here, the heating temperature may be set as appropriate, depending on the type of the starch to be used, but is preferably 70°C or higher. The cooking of starches may be conducted in a batch or continuous process.

The cooking may be carried out after, or simultaneously with, the above-described cationization.

Preferably, the viscosity of the starch glue solution to be used is 100 to 10,000 mPa·s as determined at 25°C and at a solid content of 10 to 40 weight% using a type B viscometer.

The polysaccharide glue solution used in the invention is preferably diluted with water and made into a 3 to 10 weight% slurry.

When the polysaccharide glue solution has aged or solidified or has become poor in dispersability in water, it is preferably subjected to cooking treatment prior to use. In this case, the cooking method may be the same as that described above.

1-2. Cationic monomers

Cationic monomers may be various compounds in so far as they have radical polymerizability, and specific examples thereof include tertiary salts exemplified by hydrochlorides and sulfates of dialkylaminoalkyl (meth)acrylates such as dimethylaminoethyl (meth)acrylate, diethylaminoethyl (meth)acrylate, dimethylaminoethyl (meth)acrylate, diethylamino-2-hydroxypropyl (meth)acrylate, and dimethylaminopropyl (meth)acrylate; tertiary salts exemplified by hydrochlorides and sulfates of dialkylaminoalkyl (meth)acrylamides such as dimethylaminoethyl (meth)acrylamide; quaternary salts exemplified by alkyl halide adducts such as methyl chloride adducts and aryl halide adducts such as benzyl chloride adducts of dialkylaminoalkyl (meth)acrylates; and quaternary salts exemplified by alkyl halide adducts such as methyl chloride adducts and aryl halide adducts such as benzyl chloride adducts of dialkylaminoalkyl (meth)acrylamides.

Among these compounds, quaternary salts of dialkylaminoalkyl (meth)acrylates are preferable; alkyl halide adducts of dialkylaminoalkyl (meth)acrylates are more preferable.

1-3. Anionic monomers

Anionic monomers may be various compounds in so far as they have radical polymerizability, and specific examples thereof include unsaturated carboxylic acids such as (meth)acrylic acid, crotonic acid, itaconic acid, and maleic acid, and salts thereof. Examples of the salts include ammonium salts and salts of alkali metals such as sodium and potassium.

Among these, (meth)acrylic acid is preferable.

### 1-4. Other monomers

In the present invention, the amphoteric polymer comprises the cationic monomer and the anionic monomer as indispensable components, and may further comprise a nonionic radical-polymerizable monomer (hereinafter referred to as nonionic monomer) as required.

The nonionic monomer includes (meth)acrylamide, dimethyl (meth)acrylamide, diethyl (meth)acrylamide, hydroxylethyl (meth)acrylate, ethylene oxide adducts of methoxy (meth)acrylate, and ethylene oxide adducts of (meth)allyl ether.

Among these, (meth)acrylamide is preferable.

Monomers other than the above described monomers may be used in combination as required. Other monomers include, for example, methoxyethyl (meth)acrylate, butoxyethyl (meth)acrylate, ethylcarbitol (meth)acrylate, methyl (meth)acrylate, ethyl (meth)acrylate, and vinyl acetate.

### 1-5. Production method

The amphoteric polymer of the present invention is one which is obtained by polymerizing a cationic monomer and an anionic monomer in a presence of a polysaccharide.

This kind of production method includes, for example, a method in which a cationic monomer and an anionic monomer are polymerized in the presence of a polymerization initiator and a polysaccharide in accordance with an ordinary method.

Hereinafter, the respective components to be used, method of polymerization, and the like will be explained.

1) Proportion and combination of polysaccharide and monomer

Referring to the proportion of polysaccharide and monomer of the amphoteric polymer of the invention, the proportion of the monomer is preferably 50 weight% or more, more preferably 50 to 99 weight% based on the total amount of the polysaccharide and all the monomers.

When the proportion of the monomer is less than 50 weight%, the resultant polymer sometimes becomes insoluble in water, or does not provide a high molecular weight polymer for use as a flocculant.

As the preferred combination of monomers in the present invention, mention may be made of (1) a copolymer comprising a tertiary salt or quaternary salt of a dialkylaminoalkyl acrylate as a cationic monomer, an acrylic acid salt as an anionic monomer, and acrylamide as a nonionic monomer, (2) a copolymer comprising a tertiary salt or quaternary salt of a dialkylaminoalkyl methacrylate as a cationic monomer, an acrylic acid salt as an anionic monomer, and acrylamide as a nonionic monomer, and (3) a copolymer comprising a tertiary salt or quaternary salt of a dialkylaminoalkyl methacrylate and a tertiary salt or quaternary salt of a dialkylaminoalkyl acrylate as cationic monomers, an acrylic acid salt as an anionic monomer, and acrylamide as a nonionic monomer.

### 2) Polymerization initiator

The polymerization initiator includes azo polymerization initiator, redox polymerization initiator, photopolymerization initiator, and the like. Hereinafter, each polymerization initiator will be described.

### (1) Azo polymerization initiator

Employed as azo polymerization initiators may be various compounds, and specific examples thereof include 4,4'-azobis(4-cyanovaleric acid) (10-hour half life temperature: 69°C; the below-described temperatures inside the parentheses show the same meaning); 2,2'-azobisisobutyronitrile (65°C); 2,2'-azobis(2-methylbutyronitrile) (67°C); 2,2'-azobis[2-methyl-N-(2-hydroxyethyl)propionamide] (86°C); 2,2'-azobis(2-amidinopropane) hydrochloride (56°C); and 2,2'-azobis[2-(2-imidazolin-2-yl)propane] hydrochloride (44°C).

Azo polymerization initiators may be used alone or in a combination of two or more.

Among the above-described azo polymerization initiators, preferable compounds are azo polymerization initiators which have a 10-hour half life temperature of 50°C or more, more preferably 50 to 90°C, even more preferably 50 to 70°C since they have a high solubility in water, generate an amphoteric polymer containing no or little insoluble content, produce an amphoteric polymer with a high molecular weight, and provide an amphoteric polymer containing a reduced amount of unreacted monomers.

Proportion of the azo polymerization initiator to be used is preferably 50 to 5,000 ppm, more preferably 100 to 3,000 ppm, even more preferably 300 to 1,000 ppm, based on the total amount of the polysaccharide and the monomer. An azo polymerization initiator proportion of less than 50 ppm results in incomplete polymerization with an increase in the amount of residual monomers; more than 5,000 ppm provides a water-soluble polymer with lower molecular weight.

(2) Redox polymerization initiator

The redox polymerization initiator is a combination of an oxidizing agent and a reducing agent.

The oxidizing agent is preferably a peroxide because it has a hydrogen-abstracting effect on polysaccharides and grafts monomers onto polysaccharides favorably. Examples of the peroxide include persulfates such as sodium persulfate, potassium persulfate, and ammonium persulfate, organic peroxides such as benzoyl peroxide, t-butyl hydroperoxide, and succinic acid peroxide, hydrogen peroxide, and sodium bromate. Among these peroxides, persulfates are preferred in that they are excellent in hydrogen-abstracting effect even at low temperature at the beginning of polymerization.

Examples of the reducing agent include sulfites such as sodium sulfite, bisulfites such as sodium bisulfite, ascorbic acid or its salts, rongalite, dithionous acid or its salts, triethanolamine, and cuprous sulfate.

Examples of a preferred combination of the peroxide and the reducing agent include a persulfate and a sulfite, and a persulfate and a bisulfite.

Proportion of the oxidizing agent is preferably 10 to 1,000 ppm, more preferably 20 to 500 ppm, particularly preferably 40 to 200 ppm, based on the total amount of the polysaccharide and the monomer. A proportion of less than 10 ppm may result in insufficient hydrogen-abstracting; more than 1,000 ppm may allow the amphoteric polymer to become too low in molecular weight to exhibit sufficient performance.

Proportion of the reducing agent is preferably 10 to 1,000 ppm, more preferably 20 to 500 ppm, based on the total amount of the polysaccharide and the monomer.

When the redox polymerization initiator is used, it is preferably supplemented with a polymerization promoter, for example, one based on an inorganic metal such as cupric chloride and ferrous chloride.

(3) Photopolymerization initiator

Preferred photopolymerization initiators include ketal type photopolymerization initiators and acetophenone type photopolymerization initiators because they have a hydrogen-abstracting effect on polysaccharides and graft monomers onto polysaccharides favorably. In this instance, optical cleavage occurs to generate a benzoyl radical which functions as a hydrogen-abstracting agent.

Examples of the ketal type photopolymerization initiator include 2,2-dimethoxy-1,2-diphenylethan-1-one and benzyldimethylketal.

Examples of the acetophenone type photopolymerization initiator include diethoxyacetophenone, 4-(2-hydroxyethoxy)phenyl-(2-hydroxy-2-propyl)ketone, 1-hydroxycyclohexyl-phenylketone, 2-methyl-2morpholino(4-thiomethylphenyl)propan-1-one, 2-benzyl-2-dimethylamino-1-(4-morpholinophenyl)-butane, 2-hydroxy-2-methyl-1-phenylpropan-1-one, and 2-hydroxy-2methyl-1-[4-(1-methylvinyl)phenyl], and these oligomers.

In addition to the above compounds, the photopolymerization initiator may also be a benzoin type photopolymerization initiator, a thioxanthone type photopolymerization initiator, or a photopolymerization initiator having a polyalkyleneoxide group as described in Japanese Patent Laid-Open (Kokai) No. 2002-097236.

Proportion of the photopolymerization initiator is preferably 10 to 1,000 ppm, more preferably 20 to 500 ppm, even more preferably 40 to 200 ppm, based on the total amount of the polysaccharide and the monomer. A proportion of less than 10 ppm may result in insufficient hydrogen-abstracting or an increase in the amount of residual monomers; more than 1,000 ppm may allow the amphoteric polymer to become too low in molecular weight to exhibit sufficient performance.

When the photopolymerization initiator is used, a photosensitizer exemplified by an amine-based photosensitizer including triethanolamine and methyldiethanolamine may be also combined.

3) Manner of polymerization

Manner of polymerization includes aqueous polymerization, inverse phase suspension polymerization, and inverse phase emulsion polymerization; the aqueous polymerization and inverse phase emulsion polymerization are preferable in that they are easy to operate.

When the aqueous polymerization is adopted, the polysaccharide and the monomer are dissolved or dispersed in an aqueous medium to polymerize at 10 to 100°C in the presence of the polymerization initiator. The polysaccharide and the monomer as raw materials are dissolved or dispersed in water, and then added to an aqueous medium when they are used.

When the inverse phase emulsion polymerization is adopted, a method is employed in which an aqueous solution containing the polysaccharide and the monomer is stirred and mixed with an organic dispersion medium containing a hydrophobic surfactant with an HLB of 3 to 6 to perform emulsification, followed by polymerization at 10 to 100°C in the presence of the polymerization initiator to yield a water-in-oil type (inverse phase) polymer emulsion. Examples of the organic dispersion medium include high boiling point hydrocarbon solvents such as mineral spirit.

Proportion of the polysaccharide and the monomer in the aqueous medium or organic dispersion medium may be set as appropriate according to purposes, and is preferably 20 to 70 weight%.

Polymerization method may be photopolymerization, redox polymerization, or the like according to types of the polymerization initiator to be used.

Concretely, the polymerization method may be carried out by adding the polymerization initiator to the aqueous solution or inverse phase emulsion containing the polysaccharide and the monomer.

The polymerization method can also be a combination of the photopolymerization and the redox polymerization.

When molecular weight is controlled, a chain transfer agent may be used. Examples of the chain transfer agent include thiol compounds such as mercaptoethanol and mercaptopropionic acid, and reducing inorganic salts such as sodium sulfite, sodium bisulfite, and sodium hypophosphite.

In the present invention, aqueous polymerization is preferable. In this instance, polymerization is preferably carried out under light irradiation because of short polymerization time and excellent productivity.

When the polymerization under light irradiation is carried out, ultraviolet light and/or visible light can be used as an irradiation light; the ultraviolet light is preferable.

Intensity of light irradiation is determined in consideration of types of the monomer, types or concentration of the photopolymerization initiator and/or photosensitizer, the molecular weight of the amphoteric polymer of interest, polymerization time, and the like, and is, in general, preferably 0.5 to 1,000 $W/m^2$, more preferably 5 to 400 $W/m^2$.

Source of light may be, for example, a fluorescent chemical lamp, a fluorescent blue lamp, a metal halide lamp, or a high pressure mercury lamp.

In polymerization reaction under light irradiation, temperature of an aqueous solution of the monomer is not particularly restricted, but typically is preferably 5 to 100°C, more preferably 10 to 95°C in order to allow the photopolymerization reaction to smoothly proceed under mild conditions. The temperature at the beginning of polymerization is preferably 5 to 15°C since amphoteric polymers high in molecular weight are obtained, and heat is easily removed.

The polymerization reaction under light irradiation of an aqueous solution of the monomer may be conducted in a batch process or a continuous process.

4) Preferable polymerization method

The production method for the amphoteric polymer is preferably a method in which a cationic monomer and a anionic monomer are polymerized in the presence of a polysaccharide, an azo polymerization initiator and a hydrogen-abstracting agent, because this allows polymers of high molecular weight to be grafted onto the polysaccharide, reduces the amount of residual monomers, and provides an amphoteric polymer which exhibits various excellent flocculation performance when used as a flocculant.

The azo polymerization initiator includes those as mentioned above.

Examples of the hydrogen-abstracting agent include a redox hydrogen-abstracting agent (hereinafter referred to as an RD abstracting agent) and a photopolymerization initiator type hydrogen-abstracting agent (hereinafter referred to as a PT abstracting agent). The RD abstracting agent and PT abstracting agent not only abstract hydrogen from a polysaccharide, but also function as a polymerization initiator for the monomer.

The RD abstracting agent is preferably an oxidizing agent and the like, and examples of the oxidizing agent include those as mentioned above. In this case, it is preferably used in combination with a reducing agent.

The PT abstracting agent is preferably a ketal type photopolymerization initiator or an acetophenone type photopolymerization initiator, and examples thereof include those as mentioned above.

5) Treatment of the obtained amphoteric polymer

An amphoteric polymer obtained by aqueous polymerization, which is usually in a form of gel, is chopped by a known method. The chopped polymer is dried at a temperature of the order of 60 to 150°C by means of a band dryer, a far-infrared dryer or the like, ground into powdered polymer by means of a roll type grinder or the like, and subjected to size control, and optionally supplemented with an additive or the like before it is used.

When an amphoteric polymer obtained by water-in-oil (inverse phase) emulsion polymerization is actually used, it is phase-inverted to an oil-in-water emulsion by adding a hydrophilic surfactant with a relatively high HLB and diluting with water.

As the amphoteric polymer, one which is in a form of powder is preferably used.

The amphoteric polymer preferably has a value of 10 to 200 mPa·s in terms of 0.5% salted viscosity which is an index of molecular weight, and it is preferable that when the polymer is used as an amphoteric polymer flocculant described later, the value falls in the range of more preferably 15 to 120 mPa·s, most preferably 15 to 90 mPa·s in order to attain a stable dewatering operation.

The "0.5% salted viscosity" referred to in the present invention means a value obtained by dissolving an amphoteric polymer in a 4% sodium chloride aqueous solution to obtain a 0.5 wt% sample solution of the polymer, and subjecting it to measurement at 25°C by use of a B type viscometer with a rotor No. 1 or 2 at 60 rpm.

The amphoteric polymer should contain, as a major ingredient, graft copolymers in which monomers are graft-polymerized onto a polysaccharide, but may contain polymers which result from the monomers but are not grafted onto the polysaccharide.

## 2. Composition

The composition of the present invention is a composition containing two or more types of amphoteric polymers differing in ratio of cationic monomer units to anionic monomer units, and specifically comprises an amphoteric polymer satisfying the following expression (1) (hereinafter referred to as amphoteric polymer (1)) in combination with an amphoteric polymer satisfying the following expression (2) (hereinafter referred to as amphoteric polymer (2)) or an amphoteric polymer satisfying the following expressions (3) and (4) (hereinafter referred to as amphoteric polymer (3)):

$$Ca_1/An_1 \geq 1 \qquad \ldots (1)$$

$$Ca_2/An_2 < 1 \qquad \ldots (2)$$

$$Ca_3/An_3 \geq 1 \qquad \ldots (3)$$

$$|(Ca_1-An_1)-(Ca_3-An_3)| \geq 1.5 \qquad \ldots (4)$$

In the expressions (1)-(4), $Ca_1$ and $An_1$ respectively represent the total mole number of the cationic monomer units and the total mole number of the anionic monomer units in the amphoteric polymer (1) on a condition that the total mole number of all the constituent monomer units in the amphoteric polymer (1) is converted to be 100 mol; on a condition similar to the above, $Ca_2$ and $An_2$ respectively represent the total mole number of the cationic monomer units and the total mole number of the anionic monomer units in the amphoteric polymer (2); and on a condition similar to the above, $Ca_3$ and $An_3$ respectively represent the total mole number of the cationic monomer units and the total mole number of the anionic monomer units in the amphoteric polymer (3).

Referring to the present composition which comprises the amphoteric polymers (1) and (2) in combination, the composition is one in which the amphoteric polymer (1) which is cation-rich and the amphoteric polymer (2) which is anion-rich are used in combination.

In this case, the amphoteric polymer (1) is preferably one in which $Ca_1/An_1$ is 1.5 to 10.0, and the amphoteric polymer (2) is preferably one in which $Ca_2/An_2$ is 0.5 to 0.9.

Next, referring to the present composition which comprises the amphoteric polymers (1) and (3) in combination, the composition is one in which the amphoteric polymers (1) and (3), which are both cation-rich amphoteric polymers but are respectively large and small in difference between cationic constituent monomer units and anionic constituent monomer units, are used in combination.

In this case, it is preferable that $Ca_1/An_1$ is 1.2 to 40.0, and $Ca_3/An_3$ is 1.2 to 40.0.

It is preferable that $|(Ca_1-An_1)-(Ca_3-An_3)|$ is 1.5 to 40.0. If this value is smaller than 1.5, the high flocculation performance resulting from the blended use is often unattained.

The amphoteric polymers (1)-(3) can be obtained by copolymerization of cationic monomer and anionic monomer in such a way that the above described monomer unit ratios are satisfied.

The composition of the present invention can be produced by mixing the amphoteric polymer (1) with the amphoteric polymer (2) or the amphoteric polymer (3). Alternatively, in the below described dewatering of sludge or papermaking process, each of the components may be added separately.

For each of the amphoteric polymers (1)-(3), either one type or two or more types can be used in combination, however it is convenient and preferable to use one type for each of the above described amphoteric polymers (1)-(3).

Proportion of each of the amphoteric polymers in the composition can be appropriately set according to purposes. When the composition comprises the amphoteric polymers (1) and (2), it is preferable that the amphoteric polymer (1) is used in the range of 40 to 90 weight% and the amphoteric polymer (2) is used in the range of 60 to 10 weight%.

When the composition comprises the amphoteric polymers (1) and (3), it is preferable that the amphoteric polymer (1) is used in the range of 10 to 90 weight% and the amphoteric polymer (3) is used in the range of 90 to 10 weight%.

When an amphoteric polymer flocculant in a form of powder is used, it is preferable that sodium bisulfate, sodium sulfate, sulfamic acid or the like is added thereto upon use. It is possible that the flocculant is mixed with a known additive upon use in so far as it does not affect dewatering.

### 3. Applications

The composition obtained in the invention can be applied to various applications, and is particularly useful as a polymer flocculant. As a polymer flocculant, it may be also preferably used as, for example, a sludge-dewatering agent and an agent for papermaking in a papermaking process such as a retention aid.

The polymer flocculant according to the invention is particularly useful as a sludge-dewatering agent and a retention aid. The sludge-dewatering agent and the retention aid are described below.

### 3-1. Sludge-dewatering agent and a method for dewatering sludge

When the polymer flocculant of the present invention is used as a sludge-dewatering agent (hereinafter, sometimes referred to as a polymer flocculant), the polymer is preferably in a form of powder or inverse phase emulsion. In actual use, when the polymer is powder, the powder is dissolved in water, and used as an aqueous solution. When the polymer is an inverse phase emulsion, it is diluted with water so as to be phase-inverted, and used in the form of an oil-in-water emulsion.

When a sludge-dewatering agent in a form of powder is used, it is preferable that sodium bisulfate, sodium sulfate, sulfamic acid or the like is added thereto upon use. It is possible that the sludge-dewatering agent is mixed with a known additive upon use in so far as it does not affect dewatering.

The sludge-dewatering agent of the invention can be applied to various sludge such as sludge of organic nature, and mixed sludge including flocculated and sedimented sludge and the like derived from sewage, human waste and general industry waste water such as sludge of food industry, chemical industry, and pulp or papermaking industry.

Particularly, the sludge-dewatering agent of the present invention can be preferably applied to sludge small in fibrous content, and sludge high in ratio of excess sludge. Specifically, the sludge dewatering agent of the present invention can be preferably applied to sludge of 10 SS% or more, more preferably 20 to 50 SS% in terms of ratio of excess sludge.

The present dewatering method using the sludge-dewatering agent of the present invention is concretely a method in which a sludge-dewatering agent is added to sludge, and then the sludge is subjected to dewatering.

The sludge-dewatering agent is added to sludge to form sludge flocs. The floc formation method can follow the methods well-known in the art.

If necessary, inorganic flocculants, organic cationic compounds, cationic polymer flocculants and anionic polymer flocculants can additionally be used.

Examples of the inorganic flocculants include aluminum sulfate, poly aluminum chloride, ferric chloride, ferrous sulfate, poly iron sulfate and the like.

Examples of the organic cationic compounds include polymer polyamine, polyamidine, cationic surfactants and the like.

In the case where inorganic flocculants or organic cationic compounds are added, it is preferable to adjust the pH to be 4 to 8 since sludge can be treated effectively.

As for the pH adjustment method, no particular pH adjustment is needed when an appropriate pH value is obtained after inorganic flocculants or organic cationic compounds are added; however, when the pH range prescribed in the present invention is not satisfied, an acid or an alkali can be added for adjustment.

Examples of the acids include hydrochloric acid, sulfuric acid, acetic acid, sulfamic acid and the like. Additionally, examples of the alkalis include caustic soda, caustic potash, calcium hydroxide, ammonia and the like.

Examples of the cationic polymer flocculants include homopolymers of the above described cationic monomers, copolymers of the above described cationic monomers and nonionic monomers, and the like.

Examples of the anionic polymer flocculants include homopolymers of the above described anionic monomers, copolymers of the above described anionic monomers and nonionic monomers, and the like.

Proportion of polymer flocculant to be added relative to sludge is preferably 5 to 500 ppm, and the proportion thereof relative to SS is preferably 0.05 to 1 weight%. When a polymer flocculant and another polymer flocculant are used in combination, it is preferable that the total amount of all the polymer flocculants satisfies the above-described proportion.

Addition amounts of the sludge-dewatering agent and other flocculants, stirring speed, stirring time and the like are recommended to follow the dewatering conditions employed in prior art.

The flocs thus formed are dewatered by procedures well known in the art to form dewatered cakes.

Examples of the dewatering machines include a screw press dewatering machine, a belt press dewatering machine, a filter press dewatering machine, a screw decanter and the like.

Additionally, the sludge dewatering agent of the present invention can be applied to a dewatering method which uses a vessel for granulation and concentration having a filtering part.

Specifically, examples of the dewatering methods include a method in which an inorganic flocculant is added to sludge, then, either after a sludge dewatering agent has been further added or together with the sludge dewatering agent, the sludge is introduced into the vessel for granulation and concentration having the filtering part, the filtrate is taken out of the filtering part while the granulation is made concurrently, and the granulated matter is subjected to dewatering by means of a dewatering machine.

3-2. Retention aids and papermaking methods

When the composition of the present invention is used as a retention aid, the polymer is preferably in a form of powder or inverse phase emulsion. In actual use, as described above, when the polymer is powder, the powder is dissolved in water, and used as an aqueous solution, or when the polymer is an inverse phase emulsion, it is diluted with water so as to be phase-inverted, and used in the form of an oil-in-water emulsion. In both cases, solid content is preferably 0.01 to 0.5 weight%, more preferably 0.01 to 0.1 weight%.

The papermaking method using the present composition may be in accordance with a conventional method, and can be carried out by adding the present composition to stuff, and then performing papermaking.

The method for adding the retention aid can be in accordance with a conventional method in such a way that, for example, the aid is added when the stuff is diluted to the final concentration for charging into the papermaking machine or added after the dilution.

Stuffs to which the retention aid is applied include those that have been used in the usual papermaking process, and usually contain at least pulp and filler, and optionally additives other than filler, specifically including sizing agents, fixers, paper strength agents, colorants and the like.

The retention aid of the present invention is preferably applied to pulp which is constituted by waste paper such as deinked waste paper in a relatively high proportion to the whole pulp. Also, the retention aid of the present invention can be preferably applied to the papermaking system high in filler content, the neutral papermaking system, and the high-speed papermaking system.

Examples of the fillers include clay, kaoline, agalite, talc, calcium carbonate, magnesium carbonate, sulfate of lime, barium sulfate, zinc oxide, titanium oxide and the like. Examples of the sizing agents include acrylic acid-styrene copolymers and the like; examples of the fixers include aluminum sulfate, cationic starch, alkylketene dimer and the like; and examples of the paper strength agents include starch, cationic or amphoteric polyacrylamide and the like.

Proportion of the retention aid to be added is preferably 0.005 to 0.8 weight%, more preferably 0.005 to 0.5 weight% in relation to the dry pulp weight in the stuff.

The pH value of the stuff after adding the retention aid is maintained to be preferably 5 to 10, more preferably 5 to 8. Immediately after the addition of the retention aid, the stuff is charged into the papermaking machine.

EFFECTS OF INVENTION

When the composition of the present invention is used as a polymer flocculant, the composition is excellent as a sludge-dewatering agent for various types of sludge in various dewatering performance, particularly in terms of flocculationability, namely, growth of flocs and their sustainability within a mixing tank for flocculation, and is high in filtration rate and excellent in self-supportability and peelability of the resultant flocs.

Additionally, the composition of the present invention can be used as a retention aid of one-pack type that is not liable to where and when it is added during the papermaking process, and makes paper formation and retention of the papermaking process well-balanced.

BEST MODE FOR CARRYING OUT THE INVENTION

The present invention relates to a composition comprising a plurality of amphoteric polymers, in which the plurality of amphoteric polymers comprise the amphoteric polymer (1) and the amphoteric polymer (2) in combination, or the amphoteric polymer (1) and the amphoteric polymer (3) in combination.

The composition of the invention is used as an amphoteric polymer flocculant preferably.

The polymer flocculant can be preferably used as a sludge-dewatering agent or a retention aid.

When the composition is used as a sludge-dewatering agent, it is preferably used for a sludge-dewatering process in which a sludge-dewatering agent is added to sludge, and then dewatering is performed. When the composition is used as a retention aid, it is preferably used for a papermaking process in which a retention aid is added to stuff, and then papermaking is performed.

EXAMPLES

The present invention is more concretely described below with reference to Examples and Comparative Examples.

In the following description, "%" refers to weight%, and "parts" refers to parts by weight.

Production Example 1

In a stainless-steel reaction bottle were charged an aqueous solution of dimethylaminoethyl acrylate methyl chloride quaternary salt (hereinafter referred to as "DAC"), an aqueous solution of acrylic acid (hereinafter referred to as "AA") and an aqueous solution of acrylamide (hereinafter referred to as "AM") in a total amount of 760 g so as to provide a DAC/AA/AM molar ratio of 42/5/53 (DAC/AA/AM weight ratio of 66.3/3.0/30.7) and a solid content of 56%.

An amphoterized starch slurry (Ace KT-245 from Oji Cornstarch Co., Ltd.; solid content: 22% or less; hereinafter referred to as "KT-245") was diluted to a solid content of 5% with an ion exchanged water and further subjected to heating and cooking at 80°C for 30 minutes to obtain an amphoterized starch slurry having a solid content of 6%. The obtained amphoterized starch slurry was charged in an amount of 213 g which corresponds to 3% relative to the total amount of monomers and starch expressed in terms of solid contents thereof. Also, 20 g of ion exchanged water was added to adjust the solid content of all monomers and starch to 43% and the total weight of the same to 1.0 kg, followed by stirring and dispersing.

Subsequently, the solution was adjusted to a temperature of 10°C while blowing nitrogen gas into the solution for 60 minutes. Then, azobisamidinopropane hydrochloride (hereinafter referred to as V-50), cupric chloride, ammonium persulfate and sodium bisulfite, were added at concentrations of 1,000 ppm, 0.3 ppm, 30 ppm and 30 ppm, respectively based on the solid weight of all monomers and starch, followed by conducting polymerization by irradiation at an irradiation intensity of 6.0 mW/cm$^2$ for 60 minutes using a 100W black light arranged above the reaction bottle to obtain a water-soluble amphoteric polymer in hydrous gel form.

The obtained amphoteric polymer was taken out of the bottle and was dried and crushed as in Example 1 to obtain a powder amphoteric polymer. This amphoteric polymer is referred to as SCR-1.

The obtained amphoteric polymer was determined for the salted viscosity. The results are shown in Table 1.

Production Examples 2-8

Water-soluble polymers were produced in the same manner as in Production Example 1, except that components and proportions to be used were changed to those shown in Table 1 below. In Production Examples 4-8, no starch was used, but only monomers were used.

The obtained water-soluble polymers were determined for the 0.5 % salted viscosity. The results are shown in Table 1.

Table 1

| Production Example | Am | | photeric polymer | | | | Salted Viscosity (mPa· s) |
| --- | --- | --- | --- | --- | --- | --- | --- |
| | Abbreviation | KT-245 (%)[1) | Constituent monomer (mole%) | | | Ca/An | |
| | | | DAC | AA | AM | | |
| 1 | SCR-1 | 3 | 42 | 5 | 53 | 8.40 | 25 |
| 2 | SCR-2 | 3 | 12 | 2 | 86 | 6.00 | 35 |

(continued)

| Production Example | Am | | photeric polymer | | | | Salted Viscosity (mPa· s) |
|---|---|---|---|---|---|---|---|
| | Abbreviation | KT-245 (%)[1] | Constituent monomer (mole%) | | | Ca/An | |
| | | | DAC | AA | AM | | |
| 3 | SAR-1 | 3 | 30 | 35 | 35 | 0.86 | 20 |
| 4 | CR-1 | 0 | 42 | 5 | 53 | 8.40 | 38 |
| 5 | CR-2 | 0 | 12 | 2 | 86 | 6.00 | 45 |
| 6 | AR-1 | 0 | 30 | 35 | 35 | 0.86 | 30 |
| 7 | CO-1 | 0 | 38 | 15 | 47 | 2.53 | 35 |
| 8 | C-1 | 0 | 24 | 3 | 73 | 8.00 | 35 |
| 1) Proportion relative to the total amount of starch and monomers. | | | | | | | |

Example 1 (Use as sludge-dewatering agent)

As amphoteric polymers, 70 parts of SCR-1 and 30 parts of SAR-1 were used and mixed together to produce a composition, which was used as a polymer flocculant (hereinafter referred to as "SBL-1").

Two hundred milliliters (200 ml) of a papermaking sludge (SS: 38,200 mg/l, VSS: 21,700 mg/l, fibrous content: 580 mg/l) was sampled and placed in a 300 ml beaker, and stirred for 60 seconds by use of a three one motor at 100 rpm. Then, a 0.2% aqueous solution of polymer flocculant was added in an amount of 80 ppm to the sludge, followed by stirring for 60 seconds by use of a three one motor at 100 rpm to form flocs. At this point, flocculationability of the flocs was evaluated on the basis of the below described three grades, and the diameter of the obtained flocs was measured.

Thereafter, a piece of filter cloth of 80 mesh size was installed in a Nutsche funnel on which a cylinder was then stood up. Then, the above described sludge floc suspension was poured into the cylinder for gravitational filtration. The volume of the filtrate after the elapsed time of 10 seconds was measured, which was taken as the filtration rate. Additionally, appearance of the resultant filtrate was visually observed and evaluated on the basis of the below described three grades. After the filtration, the cylinder was removed, and the resultant cake was evaluated on the basis of the below described three grades.

The evaluated results are shown in Table 3.

• Flocculationability

Excellent: On stirring, flocs of large diameter were immediately formed whilst the flocs were hard to collapse.
Good: On stirring, flocs of large diameter were immediately formed whilst the flocs were easy to collapse.
Poor: Even after continued stirring, merely flocs of small diameter were formed, and the resultant flocs, if any, were easy to collapse by stirring.

• Filtrate appearance

Excellent: Completely transparent.
Good: A slight amount of suspended solid was found.
Poor: A large amount of suspended solid was found.

• Self-supportability

Excellent: The cake stood completely by itself.
Good: The cake collapsed slightly.
Poor: The cake collapsed completely.

Comparative Examples 1 and 2 (Use as sludge-dewatering agent)

As a polymer flocculant, the composition (BL-1) shown in Table 2 below was produced in the same manner as in Example 1.

Dewatering of sludge was carried out in the same manner as that in Example 1, except that flocculants shown in Table 3 were used as polymer flocculants.

The evaluated results obtained in the same manner as in Example 1 are shown in Table 3.

Table 2

| Polymer flocculant | Amphoteric polymer (parts) | | Constituent monomer mixture at average ratio (mole%) | After mixing Ca/An |
|---|---|---|---|---|
| SBL-1 | SCR-1 (70) | SAR-1 (30) | DAC/AA/AMD (38/15/47) | 2.53 |
| BL-1 | CR-1 (70) | AR-1 (30) | DAC/AA/AMD (38/15/47) | 2.53 |

Table 3

| | Polymer flocculant (ppm) | Evaluated results | | | | |
|---|---|---|---|---|---|---|
| | | Granulation-ability | Floc diameter (mm) | Filtration rate | Filtration appearance | Self-support-ability |
| Example 1 | SBL-1 80 | Excellent | 8-10 | 180 | Excellent | Excellent |
| Comparative example 1 | BL-1 80 | Good | 6-9 | 170 | Good | Good |
| Comparative example 2 | CO-1 80 | Poor | 3-5 | 135 | Poor | Poor |

It was found that the polymer flocculant of the Example was excellent in various sludge dewatering performances.

On the other hand, the polymer flocculant BL-1 of Comparative Example 1, which is the same blend as SBL-1 except for not starch-modified, gave flocs easy to collapse by continued stirring, and was finally insufficient in various dewatering performances. The polymer flocculant CO-1 of Comparative Example 2, which had the same monomer composition as SBL-1 but consisted of a single amphoteric polymer unmodified with starch, was also inferior in flocculationability and insufficient in various dewatering performances.

Example 2 (Use as sludge-dewatering agent)

As amphoteric polymers, 50 parts of SCR-1 and 50 parts of SCR-2 were used and mixed together to produce a composition, which was used as a polymer flocculant (hereinafter referred to as "SBL-2").

Flocs were formed in the same manner as in Example 1, except that 200 ml of a papermaking sludge (SS: 13,600 mg/l, VSS: 10,000 mg/l, fibrous content: 4100 mg/l) was used, and a 0.2% aqueous solution of the polymer flocculant was added in an amount of 30 ppm to the sludge.

The evaluated results obtained in the same manner as in Example 1 are shown in Table 5.

Comparative Examples 3 and 4 (Use as sludge-dewatering agent)

As a polymer flocculant, the composition (BL-2) shown in Table 4 below was produced in the same manner as in Example 2.

Dewatering of sludge was carried out in the same manner as that in Example 2, except that flocculants shown in Table 5 were used as polymer flocculants.

The evaluated results obtained in the same manner as in Example 2 are shown in Table 5.

Table 4

| Polymer flocculant | Amphoteric polymer (parts) | | Constituent monomer mixture at average ratio (mole%) | $(Ca_1\text{-}An_1)\text{-}(Ca_2\text{-}An_2)$ | After mixing Ca/An |
|---|---|---|---|---|---|
| SBL-2 | SCR-1 (50) | SCR-2 (50) | DAC/AA/AMD (24/3/73) | 27 | 8.00 |

(continued)

| Polymer flocculant | Amphoteric polymer (parts) | | Constituent monomer mixture at average ratio (mole%) | $(Ca_1-An_1)-(Ca_2-An_2)$ | After mixing Ca/An |
|---|---|---|---|---|---|
| BL-2 | CR-1 (50) | CR-2 (50) | DAC/AA/AMD (24/3/73) | 27 | 8.00 |

Table 5

| | Polymer flocculant (ppm) | Evaluated results | | | | |
|---|---|---|---|---|---|---|
| | | Granulation-Ability | Floc diameter (mm) | Filtration rate | Filtration appearance | Self-support-ability |
| Example 2 | SBL-2 30 | Excellent | 8-10 | 175 | Excellent | Excellent |
| Comparative example 3 | BL-2 30 | Good | 6-8 | 160 | Good | Good |
| Comparative example 4 | C-1 30 | Poor | 3-4 | 140 | Poor | Poor |

It was found that the polymer flocculant of the Example was excellent in various sludge dewatering performances.

On the other hand, the amphoteric polymer flocculant BL-2 of Comparative Example 3, which is the same blend as SBL-2 except for not starch-modified, gave flocs easy to collapse by continued stirring, and was finally insufficient in various dewatering performances. The polymer flocculant C-1 of Comparative Example 4, which had the same monomer composition as SBL-2 but consisted of a single amphoteric polymer unmodified with starch, was also inferior in flocculationability and insufficient in various dewatering performances.

Examples 3 (Use as retention aid)

As a retention aid, an aqueous solution containing 0.05 weight % of SBL-1 was used.

A pulp slurry of 1% solid content (hereinafter referred to as a raw pulp slurry) consisting of deinked waste paper (50 SS%) and kraft pulp (50 SS%) from a broad leaf tree, both of which had been disintegrated and beated, was employed. In this respect, the deinked waste paper and the pulp were disintegrated to the Canadian standard freeness (herein after referred to as CSF) of 350 ml according to JIS P 8121 except that the 1% sample was used.

To the raw pulp slurry, the following components (1) to (5) were added in this order at intervals of 30 seconds under stirring at 1,000 rpm, and the total retention was measured by means of the dynamic drainage jar method. Paper formation was evaluated as follows: A pulp slurry to which the retention aid was added was used to carry out papermaking employing a square type bronze screen from Kumagai Riki Kogyo Co., Ltd. before pressing using a square type sheet machine press. Then, a formation index (the greater the index is, the better the formation is) of the resultant paper was measured with a formation tester after it was dried at 100°C in an autodrier.

The obtained results are shown in Table 6. The final pH value of the pulp slurry was 7.9.

(1) Light calcium carbonate: 20 % (a proportion in relation to the pulp solid content in the pulp slurry, and hereinafter referred to as "in relation to pulp")
(2) Cationic starch: 0.3 % (in relation to pulp)
(3) Aluminum sulfate: 1.7 % (in relation to pulp)
(4) Paper strength agent (a 15% aqueous solution of a copolymer made of DAC/AA/AM = 20/10/70 (molar ratio); viscosity: 3,500 mPa·s): 0.5 %
(5) Retention aid: 250 ppm (in relation to pulp)

Comparative Examples 5 and 6 (Use as retention aid)

Performances of retention aids were evaluated in the same manner as in Example 3, except that as retention aids, those shown in Table 4 were employed. The obtained results are shown in Table 4.

Table 6

| | Retention aid (ppm) | | | Evaluated results | |
|---|---|---|---|---|---|
| | SBL-1 | BL-1 | CO-1 | Total retention (%) | Formation |
| Example 3 | 250 | | | 91.0 | 45.5 |
| Comparative example 5 | | 250 | | 90.5 | 39.5 |
| Comparative example 6 | | | 250 | 83.0 | 37.5 |

The results in Table 6 show that the present retention aid was excellent in both total retention and formation, but the Comparative Examples 5 and 6 were insufficient in either total retention or formation.

Example 4 (Use as retention aid)

Papermaking and evaluation were carried out in the same manner as in Example 3, except that a 0.05 weight % aqueous solution of SBL-2 was used as a retention aid, and a pulp slurry of 1% solid content consisting of deinked waste paper pulp (100%SS) which was obtained by disintegrating and beating deinked waste paper was used.

The obtained results are shown in Table 7. The final pH value of the pulp slurry was 7.9.

Comparative Examples 7 and 8 (Use as retention aid)

Performances of retention aids were evaluated in the same manner as in Example 4, except that as retention aids, those shown in Table 7 were employed. The obtained results are shown in Table 7.

Table 7

| | Retention aid (ppm) | | | Evaluated results | |
|---|---|---|---|---|---|
| | SBL-2 | BL-2 | C-1 | Total retention (%) | Formation |
| Example 4 | 250 | | | 90.0 | 44.0 |
| Comparative example 7 | | 250 | | 90.5 | 38.0 |
| Comparative example 8 | | | 250 | 83.5 | 35.0 |

The results in Table 7 show that the present retention aid was excellent in both total retention and formation, but the Comparative Examples 7 and 8 were insufficient in either total retention or formation.

INDUSTRIAL APPLICABILITY

The composition of the present invention can be preferably used as a polymer flocculant, and particularly preferably as a sludge-dewatering agent or a retention aid.

**Claims**

**1.** A composition comprising a plurality of amphoteric water-soluble polymers obtained by polymerizing a cationic radical-polymerizable monomer and an anionic radical-polymerizable monomer in a presence of a polysaccharide, in which the plurality of polymers comprise an amphoteric polymer satisfying the following expression (1) (hereinafter referred to as amphoteric polymer (1)) in combination with an amphoteric polymer satisfying the following expression (2) (hereinafter referred to as amphoteric polymer (2)) or an amphoteric polymer satisfying the following expressions (3) and (4) (hereinafter referred to as amphoteric polymer (3)):

$$Ca_1/An_1 \geq 1 \qquad \qquad \cdots \quad (1)$$

$$Ca_2/An_2 < 1 \qquad \ldots (2)$$

$$Ca_3/An_3 \geq 1 \qquad \ldots (3)$$

$$|(Ca_1 - An_1) - (Ca_3 - An_3)| \geq 1.5 \qquad \ldots (4)$$

wherein, in the expressions (1)-(4), $Ca_1$ and $An_1$ respectively represent the total mole number of the cationic monomer units and the total mole number of the anionic monomer units in the amphoteric polymer (1) on a condition that the total mole number of all the constituent monomer units in the amphoteric polymer (1) is converted to be 100 mol; on a condition similar to the above, $Ca_2$ and $An_2$ respectively represent the total mole number of the cationic monomer units and the total mole number of the anionic monomer units in the amphoteric polymer (2); and on a condition similar to the above, $Ca_3$ and $An_3$ respectively represent the total mole number of the cationic monomer units and the total mole number of the anionic monomer units in the amphoteric polymer (3).

2. A polymer flocculant which comprises the composition defined in claim 1.

3. A sludge-dewatering agent which comprises the polymer flocculant defined in claim 2.

4. A process for dewatering sludge, which comprises adding the sludge-dewatering agent of claim 3 to sludge, and then conducting dewatering.

5. A retention aid which comprises the polymer flocculant defined in claim 2.

6. A papermaking process which comprises adding the retention aid of claim 5 to stuff, and then conducting paper-making.

<div align="center">

**INTERNATIONAL SEARCH REPORT**

</div>

| | International application No. |
|---|---|
| | PCT/JP2005/000635 |

**A. CLASSIFICATION OF SUBJECT MATTER**
Int.Cl⁷ C08L51/02, C08F251/00, D21H17/45, 17/43, 21/10, B01D21/01, C02F11/14

According to International Patent Classification (IPC) or to both national classification and IPC

**B. FIELDS SEARCHED**

Minimum documentation searched (classification system followed by classification symbols)
Int.Cl⁷ C08L51/02, C08F251/00, D21H17/45, 17/43, 21/10, B01D21/01, C02F11/14

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-175302 A (Toagosei Co., Ltd.), 24 May, 2003 (24.05.03), All references & WO 03/20829 A1 & EP 1424367 A | 1-6 |
| A | JP 8-215686 A (Kurita Water Industries Ltd.), 27 August, 1996 (27.08.96), All references (Family: none) | 1-6 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 February, 2005 (16.02.05) | 08 March, 2005 (08.03.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62021007 A
- JP 6254306 A
- JP 5056199 A
- JP 2933627 B
- JP 6000239 A
- JP 6134213 A
- JP 4281095 A
- JP 2945761 B
- JP 2003175302 A

**Non-patent literature cited in the description**

- *Bulletin of the Chemical Society of Japan,* 1976, vol. 10, 1625-1630